# EUROPÄISCHE PATENTSCHRIFT

(11) **EP 0 628 469 B1**
(45) Veröffentlichungstag und Bekanntmachung des Hinweises auf die Patenterteilung: **09.12.1998**
(21) Anmeldenummer: 94810329.6
(22) Anmeldetag: 02.06.1994
(51) Int. Cl.: B62D 33/04, B62D 31/04, B61D 3/02

(54) **Gerippestruktur**
Skeleton frame
Ossature

(30) Priorität: 08.06.1993 CH 1713/93
(43) Veröffentlichungstag der Anmeldung: 14.12.1994
(73) Patentinhaber: Alusuisse Technology & Management AG, 8212 Neuhausen am Rheinfall (CH)
(72) Erfinder: Waldeck, Klaus-Dieter, CH-8954 Geroldswil (CH); Melina, Vito, CH-5000 Aarau (CH)

(56) Entgegenhaltungen:
- EP-A- 0 129 989
- FR-A- 656 267
- FR-A- 2 635 064
- GB-A- 526 041
- GB-A- 659 902
- US-A- 4 281 870

## Beschreibung

Vorliegende Erfindung betrifft eine Gerippestruktur eines Wagenkastens nach dem Oberbegriff von Anspruch 1. Eine solche Gerippestruktur ist aus DE-A-3 424 690 bekannt.

Der seitliche Versatz der Bodenplatte eines Podestbodens zu den Seitenwandsäulen der bekannten Struktur ergibt sich dort über ein längslaufendes, die einzelnen Seitenwandsäulen verbindendes Profil. Dieses durchgehende Längsprofil bildet gleichzeitig einen Randabschluss für die Bodenplatte des Podestbodens. Der konsolenförmige Längsträger bietet bei Seitenaufprall über die ganze Länge des Wagenkastens Angriffsflächen und kann zur Zerstörung der gesamten Bodenplatte führen.

Es ist bekannt, Gerippestrukturen auf Fahrgestellrahmen (Chassis), wie z.B. Leiterrahmen, aufzusetzen. Die Fahrgestellrahmen sind bei Strassenfahrzeugen, wie Lastkraftwagen oder Bussen, mit den Achsen, Motor, Getriebe und den weiteren Antriebsteilen ausgerüstet Die Gerippestruktur wird auf dem Fahrgestellrahmen festgelegt und die Grippestruktur kann zu einem Passagierraum oder einem Laderaum ausgestaltet werden. Die Gerippestruktur stützt sich auf dem Fahrgestellrahmen ab.

Die Gerippestruktur kann neben den Seitenwandsäulen noch Längs-, Quer-Boden- und Dachgurten aufweisen. Ferner wird in der Regel ein Boden und ein Dach und fallweise ein Innendach in die Gerippestruktur eingebaut. Die Gestaltung von Bodenteilen stellt ein schwieriges Unterfangen dar, da Bodenteile durch seitliche Stosseinwirkungen leicht beschädigt werden können. Beim Bau von Gerippestrukturen sind die bis anhin angewendeten Konstruktionen mit Seitenwandsäulen und Spriegelkonstruktionen von Boden und Dach noch verbesserungsfähig.

In der FR-Patentschrift 2635064 sind Böden, Zwischenböden und Decken des Bienenwaben-ähnlichen Bautypes beschrieben. Die Teile werden mit gegenseitig verschweissten Mehrkammerprofilen zu Eisenbahnwagenstrukturen verarbeitet. Es handelt sich bei derartigen Wagenkasten um Konstruktionen anderer Art, da im wesentlichen über die ganze Wagenlänge nur längs laufende Profile verschweisst werden. Ein Austausch von beschädigten Teilen wäre, wenn überhaupt, nur durch abschnittweises Heraustrennen und Neueinschweissen möglich.

Aufgabe vorliegender Erfindung ist es, eine Gerippestruktur zur Verfügung zu stellen, welche die festgestellten Schwachpunkte nicht aufweist und die darüber hinaus bei einem Höchstmass an Nutzvolumen kleine äussere Abmessungen aufweist, resp. bei gegebenen Aussenabmessungen ein grösstmögliches Nutzvolumen ergibt, und eine weitgehend freie Gestaltung des Fahrzeuges zulässt und die eine hohe Verwindungssteifigkeit aufweist.

Erfindungsgemäss wird dies durch die Merkmale von Anspruch 1 erreicht.

Zweckmässig wird die Bodenplatte in der Höhe der unteren Enden der vertikalen Seitenwandsäulen angeordnet.

Nach vorliegender Erfindung ist die Bodenplatte bevorzugt eine mehrschichtige Verbundplatte, wie beispielsweise eine einstückige Verbundkonstruktion, enthaltend beispielsweise wenigstens drei Schichten.

Die Bodenplatte stellt bevorzugt ein einstückiges oder einteiliges Bauteil dar, das sich im wesentlichen über die Grundfläche der Gerippestruktur erstreckt.

Die Verbundkonstruktion der Bodenplatte kann beispielsweise dreischichtig aus einer Deck-, einer Basis- und einer Zwischen- oder Kernschicht aufgebaut sein. Die Basis- und die Deckschicht kann aus Materialien, wie Kunststoffen oder Metallen sein. Als Kunststoffe werden z.B. armierte Kunststoffe bevorzugt. Solche armierten Kunststoffe sind beispielsweise mit Verstärkungsfasern, wie Glasfasern, Kohlefasern, Aramidfasern, Polyamidfasern usw. oder Geweben, Gewirken oder Vliesen genannter Materialien verstärkte Kunststoffe.

Die Kunststoffe sind z.B. ungesättigte Polyesterharze oder Epoxidharze oder auch Polyolefin- oder Polyamidharze.

Bevorzugt als Basis- und Deckschicht werden Metallschichten, z.B. aus Eisen- und Nichteisenmetallen, wie Stahl, verzinkter Stahl oder Eisen, oder Aluminium. Mit der Bezeichnung Aluminium sind in vorliegender Erfindung auch die handelsüblichen Aluminiumlegierungen umfasst. Bevorzugt werden Aluminium und dessen Legierungen.

Die Kunststoffe sind z.B. ungesättigte Polyesterharze oder Epoxidharze oder auch Polyolefin- oder Polyamidharze.

Die Dicke solcher Basis- und Deckschichten kann z.B. von 1 bis 5 mm betragen.

Die Dicke der Basisschicht kann beispielsweise von 1 bis 5 mm, vorzugsweise bis 2 mm betragen.

Die Dicke der Deckschicht kann beispielsweise von 1 bis 5 mm, vorzugsweise bis 2 mm betragen.

Die Kernschicht kann beispielsweise ein Stegmaterial aus Metall oder Kunststoff sein. Das Stegmaterial kann beispielsweise aus Stahl, Eisen oder Aluminium sein oder kann aus thermoplastischen oder duroplastischen Kunststoffen sein.

Das Stegmaterial kann beispielsweise ein flächiges Material sein, das gewellt, plissiert, geprägt, gefaltet usw. ist oder kann ein waben- oder zellenförmiges Material aus Metall oder Kunststoff oder ein Streckmetall sein. Das waben- oder zellenförmige Material kann diese Waben oder Zellen senkrecht zur Basis- und Deckschicht ausgerichtet aufweisen. Die Materialien können an den Berührungspunkten mit der Basis- und Deckschicht wenigstens teilweise trennfest, z.B. durch Kleben, Löten oder Schweissen, verbunden sein.

Bevorzugt ist für die Kernschicht z.B. ein wabenförmiges Material aus Aluminiumband oder einem Aluminium-Kunststoff-Laminat oder ein schaumförmiges Material aus Kunststoff, wie beispielsweise thermoplastischen Kunststoffen der Reihe der harten Polyvinylchloridschäume, der harten Polyurethanschäume, der Polystyrolschäume, der Harnstoff-Formaldehydschäume, der Phenol-Formaldehydharzschäume, der Schäume aus ungesättigtem Polyesterharz, PIR, PMI, Styrolbuadien, Acrylinitrilstyrolbutadien, Polyethylen, Polypropylen, Polycarbonate und Polyphenylenoxid. Die Zellstruktur kann geschlossenzellig, offenzellig oder gemischtzellig sein.

Der Aufschäumungsprozess kann durch physikalische Treibmittel oder chemische Treibmittel erfolgen.

Es können Schäume mit gleichmässiger Dichteverteilung oder Integral-oder Strukturschaumstoffe angewendet werden.

Die Schäume können als Form-, Block- oder Bandschäume gefertigt werden.

Besonders bevorzugt sind harte Polyvinylchloridschäume oder harte Polyurethanschäume.

Die Kernschicht aus schaumförmigem Material kann auch Verstärkungsmaterialien, wie Verstärkungsfasern, Füllstoffe, Verarbeitungshilfsmittel und Hilfsmittel zur Erhöhung der Alterungsbeständigkeit, Flammschutzmittel zur Erhöhung der Feuerfestigkeit, Rauchunterdrücker usw. enthalten.

Das schaumförmige Material aus Kunststoffen kann mit der Basis- und der Deckschicht kaschiert werden. Beispielsweise können die Klebeigenschaften der Kunststoffe, wie der Polyurethane, ausgenützt werden oder die Basis-, die Deckschicht und/oder das schaumförmige Material können angelöst, angequollen oder angeschmolzen und mit der anderen Schicht verbunden werden. Die Anwendung von Klebstoffen, Klebebändern und dergleichen zwischen den Schichten ist ebenfalls möglich.

Die Verbundkonstruktion der Bodenplatte kann zumindest an den Seitenrändern, an den Seitenrändern und dem hinteren und vorderen Rand und gegebenenfalls auch im Bereich zwischen den Rändern verteilt, Profile, wie Kunststoff- oder Metallprofile und insbesondere Metallprofile, wie stranggepresste Profile, beispielsweise aus Aluminium oder Aluminiumlegierungen, aufweisen. Die Profile an den Seitenrändern des plattenförmigen Elementes bilden die Bodenlängsprofile oder randständigen Profile.

Die Profile können Doppel-T- oder Hohlkammerprofile sein, deren Höhe beispielsweise der Dicke der Kernschicht entspricht. Die Profile bilden dann Stege zwischen der Basis- und der Deckschicht.

Die randständigen Profile können auch in der Höhe die Dicke der Bodenplatte überragen.

Die Bodenplatten können zweckmässig randständig offene Profile aufweisen.

Die randständigen Profile können bevorzugt Mehrkammerhohlprofile sein.

Die randständigen Profile der Verbundkonstruktion der Bodenplatten können zumindest auf der nach aussen gerichteten Seite offen sein und wenigstens eine Nut oder ein C-Profil oder C-Profilteil sein oder können mit Wulsten versehen sein und somit Befestigungsmittel bilden. An den Konsolen sind kongruent dazu Befestigungsmittel, wie Wulste oder Doppelwulste oder C-Profile vorgesehen, wobei die Befestigungsmittel gegenseitig in Berührung gebracht und gegeneinander festgelegt werden können.

Bevorzugt sind Bodenplatten, die als mehrschichtige Verbundplatten mit randständigen offenen Profilen vorliegen.

Die Verbundkonstruktion kann beispielsweise einen Kern einer Dicke von 10 bis 100 mm aufweisen. Kerne aus schaumförmigem Material aus Kunststoff können z.B. eine Dicke von 10 bis 100 mm, zweckmässig von 10 bis 50 mm und bevorzugt von 25 bis 40 mm aufweisen.

Ganz besonders bevorzugt ist als Bodenplatte eine einstückige Verbundkonstruktion, wobei die Verbundkonstruktion eine untere und eine obere Deckschicht aus Aluminium in einer Dicke von 0,8 bis 2,0 mm und eine Kernschicht in einer Dicke von 20 bis 50 mm aus Hartschaumstoffen aus Kunststoff enthält.

Dieser Hartschaumstoff enthält vorwiegend oder besteht aus hartem Polyurethan oder hartem Polyvinylchlorid.

Die Gerippestruktur kann eine Dachkonstruktion aufweisen, enthaltend z.B. auf beiden Seiten der Gerippestruktur durchgehende Dachprofile oder Dachgurten und zwischen den Dachprofilen ein Dachteil, und fallweise enthaltend ein Innendach. Das Innendach kann Konsolen, wie Deckenkonsolen und eine Innendachplatte aufweisen. Die Innendachplatte steht in seitlichem Versatz zu den Seitenwandsäulen und ist mittels Konsolen einerseits an den Seitenwandsäulen und andererseits an Randbereichen der Innendachplatte festgelegt. Die Gerippestruktur kann auch einen Zwischenboden enthalten. Zwischenböden können beispielsweise bei zweistöckigen Buskonstruktionen oder bei Hochdeckerkonstruktionen angewendet werden. Ein Zwischenboden kann in seitlichem Versatz zu den Seitenwandsäulen eine Zwischenbodenplatte aufweisen und die Zwischenbodenplatte kann mittels Konsolen, die einerseits an den Seitenwandsäulen, andererseits an den den Randbereichen einer Zwischenbodenplatte festgelegt sind, in der Gitterstruktur angeordnet werden.

Das Dachteil seinerseits kann zwischen den Dachprofilen z.B. Dachspriegel oder ein Profilgerippe und Abdeckelemente oder eine einstückige Verbundkonstruktion enthalten.

Die Innendachplatte und allfällige Zwischenböden sind vorzugsweise einstückige Verbundkonstruktionen. Die Verbundkonstruktionen können gleich aufgebaut sein, wie die einstückige Verbundkonstruktion der Bodenplatte. Entsprechende Ausführungsformen, Beispiele und Bevorzugungen können dort entnommen werden.

Bevorzugt werden als Innendachplatten und Zwischenbodenplatten Verbundkonstruktionen, die gegenüber der Verbundkonstruktion der Bodenplatte eine geringere Dicke und damit ein geringeres Gewicht aufweisen.

Insbesondere können die Basis- und die Deckschicht je eine Dicke von beispielsweise 0,7 bis 1,3 mm und zweckmässig von 0,9 bis 1,1 mm und die Kernschicht eine Dicke von beispielsweise 20 bis 40 mm und zweckmässig von 25 mm aufweisen.

Bevorzugt sind Deckschichten aus Aluminium. Bevorzugt sind Kernschichten aus hartem Polyvinylchloridschaum oder aus hartem Polyurethanschaum.

Die Gerippestruktur nach vorliegender Erfindung weist ein seitliches Profilgerippe aus vertikalen Seitenwandsäulen und gegebenenfalls horizontal angeordnete Längsgurten, Abdeckbleche und Verkleidungen auf.

Zweckmässig weist das seitliche Profilgerippe zwischen dem Bodenbereich und dem durchgehenden Dachprofil angeordnet vertikale Seitenwandsäulen auf und die Seitenwandsäulen sind einstückige stranggepresste Hohlkammerprofile.

Das Profilgerippe ist beispielsweise auf allen Seiten, und insbesondere auf den Längsseiten einer Gerippestruktur, angeordnet.

Die Seitenwandsäulen können in regelmässigen oder unregelmässigen Abständen, über die Seiten der Gerippestruktur verteilt, angeordnet sein. Die Abstände können beispielsweise 0,5 m bis 1,5 m betragen.

Die Seitenwandsäulen sind z.B. Hohlkammerprofile, wobei die Hohlkammer einen rechteckigen Querschnitt aufweisen kann. An den Stirnflächen der Seitenwandsäulen können beispielsweise fahnenförmige Verlängerungen oder C-Profile angeformt sein oder die Stirnwände können hinterschnittene Nuten aufweisen.

Zweckmässig sind an jedem Ende des Wagenkastens die ersten und die letzten Seitenwandsäulen der seitlichen Gerippestruktur einstückige stranggepresste Mehrkammerhohlprofile.

Anstelle der ersten resp. letzten Seitenwandsäulen können auch die zweiten resp. zweitletzten Seitenwandsäulen in Form von stranggepressten Mehrkammerhohlprofilen verwendet werden. Es ist auch möglich, einzelne oder mehrere der mittleren Seitenwandsäulen Form von stranggepressten Mehrkammerhohlprofilpfosten zu verwenden.

Solche Mehrkammerhohlprofile enthalten in der Regel zwei Hohlkammern. Die Stirnseiten können entsprechend der Anzahl Kammern angeformte Fahnen, C-Profile oder hinterschnittene Nuten aufweisen.

Zwischen den Seitenwandsäulen können Wandverkleidungen, Fensterrahmen, Fensterkonstruktionen und Türrahmen oder Türkonstruktionen angeordnet werden. Es ist auch möglich, entlang den Seitenwänden, festgelegt an den Seitenwandsäulen, Längsprofile, Mittelgurten, durchgehende Profile oder aussen Schürzen anzubringen. Durchgehende horizontale Profile können beispielsweise zur Befestigung von Sitzen, Heizungsapparaten oder Haltevorrichtungen dienen. Äussere Schürzen schützen z.B. vor Beschädigungen und decken die Konstruktionselemente ab.

Die seitliche Begrenzung der Bodenplatte ist in einem Abstand, d.h. in seitlichem Versatz von den Seitenwandsäulen angeordnet.

Die Verbindung zwischen der Bodenplatte und dabei insbesondere deren seitlichen Begrenzungen und den einzelnen Profilpfosten wird mittels Konsolen ausgeführt. Vorteilhaft ist jeder Seitenwandsäule eine Konsole zugeordnet. Die Konsolen können beispielsweise an wenigstens einer Stirnseite jeweils einer Seitenwandsäule beispielsweise mittels einer Feder oder einem Wulst, welche in eine Nut der Seitenwandsäule greifen, festgelegt sein. An einer unteren inneren, d.h. gegen die Bodenplatte gerichteten Seite der Konsole kann beispielsweise eine waagrecht verlaufende Feder, ein Wulst, eine Doppelfeder oder ein Doppelwulst vorgesehen sein, welche in das randständige Profil an der Bodenplatte mit entsprechender einfacher oder doppelter Nut greift. Das randständige Profil an der Bodenplatte erstreckt sich vorteilhaft einstückig seitlich über deren ganze Länge. Jedes randständige Profil ist auf einer Seite an der Bodenplatte und auf der gegenüberliegenden Seite jeweils an den Konsolen festgelegt. Die Bodenplatte kann beispielsweise durch Klemm-, Klebe-, Schweiss-, Schraub- und/oder Nietverbindungen mit dem Längsprofil verbunden werden.

Die Konsole bringt die Seitenwandsäulen und den Seitenrand der Bodenplatte oder das randständige Profil an der Bodenplatte in einen seitlichen Abstand von beispielsweise 20 bis 300 mm und bevorzugt von 50 bis 150 mm. Durch diesen Abstand ist die gegen seitliche Krafteinwirkungen empfindliche Bodenplatte, wie Beschädigungen durch Aufprall, aus der gefährdeten Zone zurückversetzt.

Gleiche seitliche Abstände können für Zwischenbodenplatten und Innendachplatten vorgesehen werden.

Die Gerippestruktur gemäss vorliegender Erfindung kann selbsttragend sein.

In weiterer zweckmässiger Ausführungsform kann die erfindungsgemässe Gerippestruktur eine Bodenplatte in Form einer einstückigen Verbundplatte in seitlichem Versatz zu den Seitenwandsäulen am unteren Ende der vertikalen Seitenwandsäulen und ein Innendachteil als einstückige Verbundplatte in seitlichem Versatz zu den Seitenwandsäulen, im Bereich der oberen Enden der vertikalen Seitenwandsäulen angeordnet, aufweisen.

Die Bodenplatte, ist freitragend und benötigt ausser den Konsolen keine weiteren Stützelemente. Die Zwischenbodenplatte und die Innendachplatte können auch so konstruiert sein.

Vorliegende Erfindung betrifft auch die Verwendung der erfindungsgemässen Gerippestruktur als Kastenaufbau oder Kasteneinbau für Strassen-, Wasser- oder Schienenfahrzeuge.

Insbesondere betrifft vorliegende Erfindung die Verwendung der Gerippestruktur als Kastenaufbau für Strassenfahrzeuge für den Personentransport, für Busse, für Reisebusse, für Omnibusse oder Busse des öffentlichen Personennahverkehrs.

Die Verwendung der Gerippestruktur als Wagenkasten für Gütertransporte, beispielsweise als Koffer an Strassenfahrzeugen, insbesondere als isolierter Koffer für Kühltransporte, ist ebenfalls denkbar.

Bevorzugt ist die Verwendung der Gerippestruktur nach vorliegender Erfindung bei Fahrzeugen in Niederflurbauweise, beispielsweise bei Bussen mit niedrigem Einstieg für die Passagiere oder niedriger Ladekante für Güter.

Vorliegende Erfindung wird beispielhaft an den Figuren 1 bis 4 weiter erläutert.

Figur 1 zeigt einen Ausschnitt aus dem Querschnitt durch eine Gerippestruktur im unteren Bereich.

Figur 2 zeigt eine Säulenkonsole.

Figur 3 zeigt einen Ausschnitt aus dem Querschnitt der Gerippestruktur im Bereich eines Innendaches.

Figur 4 zeigt eine Deckenkonsole.

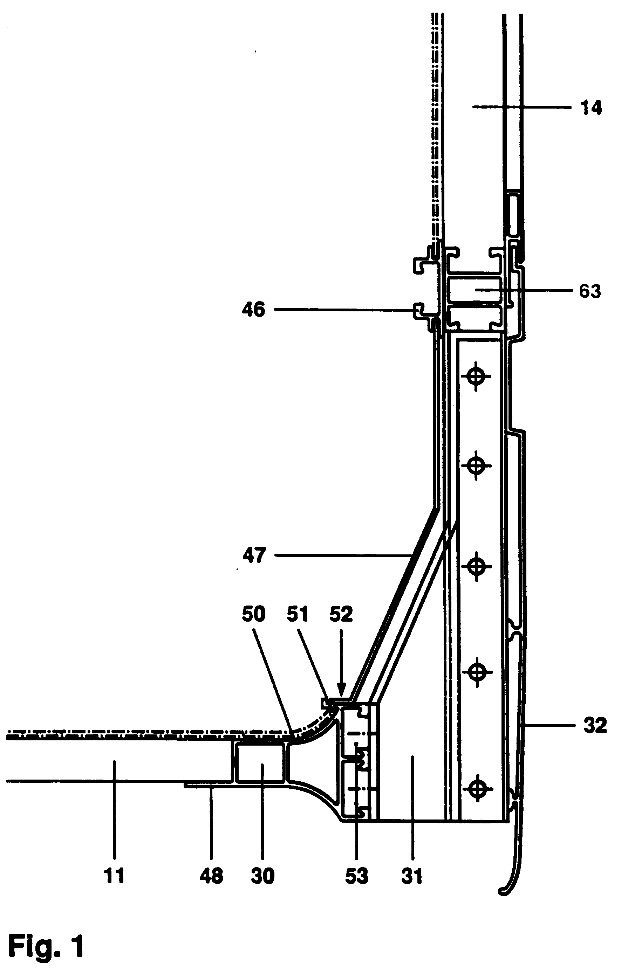

Die Figur 1 zeigt einen Ausschnitt aus dem Querschnitt durch eine Gerippestruktur nach vorliegender Erfindung. Die Bodenplatte 11, beispielsweise als Verbundkonstruktion, ist seitenwandständig mit einem Profil 30 trennfest verbunden. Das Profil 30 ist beispielhaft als Dreikammerhohlprofil ausgestaltet. Das Profil 30 enthält eine erste Kammer, und angeformt an diese erste Kammer einen fahnenförmigen Ansatz 48, an dem die untere Basisfläche der Verbundkonstruktion der Bodenplatte 11 aufliegt und gegebenenfalls trennfest verbunden ist. Die trennfeste Verbindung kann beispielsweise geklemmt, geklebt mit Klebeband und/oder Klebstoff, gegebenenfalls zusätzlich geklemmt mit Klemmleisten oder mit Klemmplättchen und Schraubenverbindungen, erfolgen.

Neben der ersten Kammer kann eine zweite Kammer angeordnet sein, die auf der nach der Wagenkasteninnenseite gerichteten Seitenwand 50 bogenförmig ansteigt und die obere Abdeckung des Profiles einen Vorsprung 51 bildet. Seitlich der zweiten Kammer sind C-Profile oder hinterschnittene Nuten 53 angeordnet. Mit diesen Nuten 53 korrespondieren die Wülste 45 der Aussenseite 44 der Konsolen 31. Es sind eine Mehrzahl von Konsolen über die Länge der Bodenplatte 11 verteilt angeordnet sein. Durch Klemmplättchen angeordnet in den C-Profilen und Schrauben kann das Profil 30 mit den Konsolen 31 trennfest verbunden werden.

Bodenbeläge können auf der Verbundkonstruktion der Bodenplatte 11 ausgelegt und an den Rändern in die bogenförmige Steigung 50 hinein bis zum Vorsprung 51 ausgelegt werden. Damit wird erreicht, dass Schmutz, Feuchtigkeit und Flüssigkeiten nicht unter den Bodenbelag gelangen können. Auf die Fläche 52 kann beispielsweise ein Abdeckblech 47 gelegt werden. Das Abdeckblech 47 kann sich durchgehend entlang der Seitenwände erstrecken und deckt die Zwischenräume zwischen den Konsolen 31 ab. Gegengleich können Schürzen 32 die Aussenseite der Gerippestruktur abdecken. Zwischen den Seitenwandsäulen 14 und der jeder Seitenwandsäule 14 zugeordneten Konsole 31 können Profilstäbe 63 angebracht sein. Über und unter diesen Profilstäben 63 können Verkleidungs- und/oder Isolierelemente angeordnet sein. In der Höhe der Profilstäbe 63, nach innen gerichtet, kann ein durchgehendes Profil 46 angeordnet werden.

Das Profil 46 kann eine untere und eine obere U-förmige Rinne aufweisen. In der unteren U-förmigen Rinne kann das Abdeckblech 47 eingeschoben werden, in die obere U-förmige Rinne kann beispielsweise eine Innenverkleidung eingesetzt werden. Das durchgehende Profil 46 weist beispielsweise auch eine C-förmige Rinne oder hinterschnittene Nut auf. In diese Nut können Befestigungselemente, wie Klemmplättchen oder Nutensteine, eingelegt werden und beispielsweise Schrauben, welche zur Sitzkonstruktion gehören, können mit dem Innengewinde am Klemmplättchen oder den Nutensteinen eine Verbindung zur Befestigung der Sitzkonstruktion ausbilden.

Fensterrahmenkonstruktionen mit Fenstern und Türrahmenkonstruktionen mit Türen können zwischen den Profilpfosten angeordnet und an diesen festgelegt werden. Desgleichen können unter, über oder anstelle von Fenstern oder Türen Verkleidungen angebracht werden.

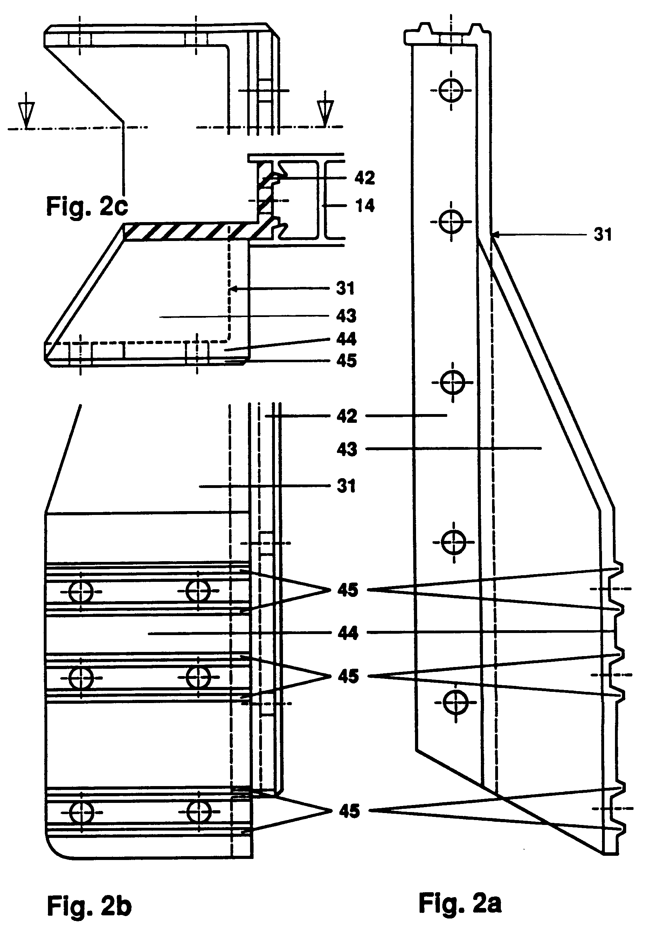

Die Figur 2a zeigt ein Beispiel einer Ansicht einer Konsole 31. Die Säulenkonsole kann beispielsweise ein Schmiede- oder Gussstück aus Metall, wie Aluminium, darstellen.

An einem säulenförmigen Teil 42 sind eine Mehrzahl von Bohrungen angebracht. Auf einer Stirnseite, über die ganze Höhe, verlaufen links und rechts der Bohrungen Federn oder wulstförmige Erhöhungen, welche mit den Nuten an den Stirnwänden der Profilpfosten korrespondieren.

Mittels Schrauben, die durch die Bohrungen geführt werden, können die Säulenkonsolen an den Profilpfosten festgelegt werden, wobei die Schrauben mit Klemmplättchen, die in einer hinterschnittenen Nut des Profilpfostens angeordnet sind, festgelegt sein können.

Vom säulenförmigen Teil 42 kragt eine Seitenfläche 43 ab. An der Aussenseite 44 der Seitenfläche 43 waagrecht und in einem rechten Winkel zu den wulstförmigen Erhöhungen des säulenförmigen Teiles 42 sind beispielsweise zwei oder drei Wulstpaare 45 angeordnet. Die Wulstpaare 45 können in die Nuten des randständigen Profiles 30 der Bodenplatte 11 eingreifen. In der Regel greifen zwei Wulstpaare 45 in die Nuten des randständigen Profiles 30 der Bodenplatte 11 ein. Die Säulenkonsole 31 wird z.B. durch Schrauben und Klemmplättchen am randständigen Profil 30 festgelegt.

Die Schraubenhälse werden durch Bohrungen, die zwischen den Wulsten 45 liegen, geführt, während die Klemmplättchen mit Innengewinde innerhalb der hinterschnittenen Nut des Profils 30 angeordnet sind und mittels der Schrauben gegen die Nocken der Hinterschneidungen gepresst werden.

Figur 2b zeigt eine Seitenansicht der Konsole 31. Waagrecht zum säulenförmigen Teil 42 und um 90 ° gedreht, sind die drei Wulstpaare 45 an der Aussenseite 44 angeordnet.

Figur 2c zeigt eine Draufsicht auf eine Konsole 31. Der säulenförmige Teil 42 weist ein Wulstpaar auf, das in eine Nut an der Stirnwand einer Seitenwandsäule 14 greifen und dort mit Schrauben und Klemmplättchen festgelegt werden kann. An der Aussenwand 44 sind die Wulstpaare 45 angeordnet. Der säulenförmige Teil 42 ist über die Seitenfläche 43 mit der Aussenseite 44 verbunden. Es ist erkennbar, dass die Konsolen 31 auf jeder Höhe einer Seitenwandsäule 14 festlegbar sind, da die Konsolen 31 entlang den C-Profilen verschoben und durch klemmen festgelegt werden können.

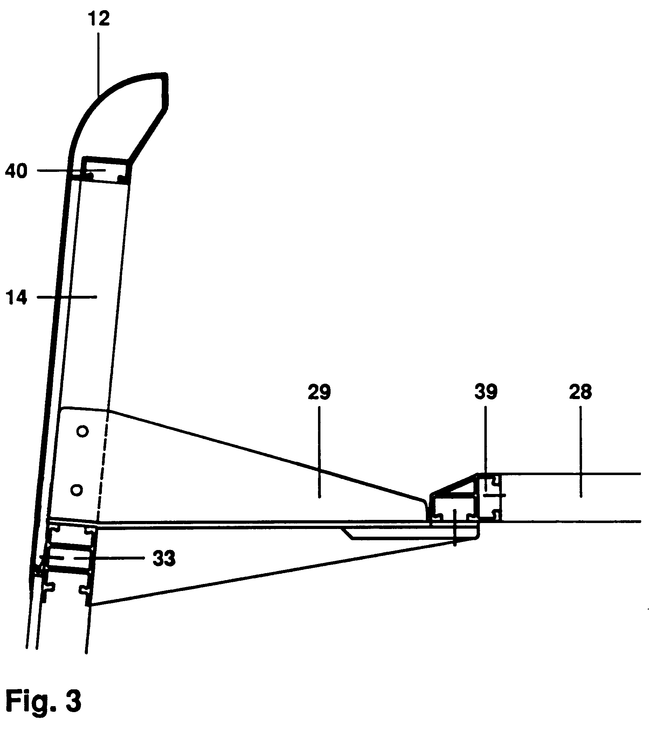

Die Figur 3 stellt einen Ausschnitt aus dem Wagenkastenquerschnitt dar.

Ein Dachprofil oder Dachgurt 12 und die Seitenwandsäulen 14 können über Verbindungseckstücke (nicht gezeigt), welche in die hinterschnittene Nut 40 am Dachprofil einerseits und in eine hinterschnittene Nut an einer Stirnseite der Seitenwandsäule 14 greifen, festgelegt werden. Ebenfalls an der hinterschnittenen Nut an einer Stirnwand einer Seitenwandsäule 14 kann die Variante einer Dachkonsole 29 festgelegt werden. Das Festlegen kann beispielsweise mittels Schrauben und Klemmstücken erfolgen. Über Eckverbindungsstücke kann jeweils zwischen zwei Seitenwandsäulen 14 ein Profilstab 33 festgelegt werden. Der Profilstab 33 kann oben und unten hinterschnittene Nuten zur Aufnahme von Klemmstücken aufweisen.

Die Dachkonsolen 29 halten ein Hohlkammerprofil 39, welches hier beispielhaft zwei C-förmige Anformungen aufweist. Die eine C-förmige Anformung oder hinterschnittene Nut dient zur Aufnahme der Klemmstücke, welche mit Schrauben die feste Verbindung zwischen Dachkonsole 29 und Hohlkammerprofil 39 ausbilden. Desgleichen dient eine weitere C-förmige Anformung zur Befestigung der Zwischendecke oder eines Innendachteils 28. Das Innendachteil 28 kann eine Verbundplatte darstellen. Das Hohlkammerprofil 39 kann als integriertes Randprofil der Verbundplatte ausgelegt sein.

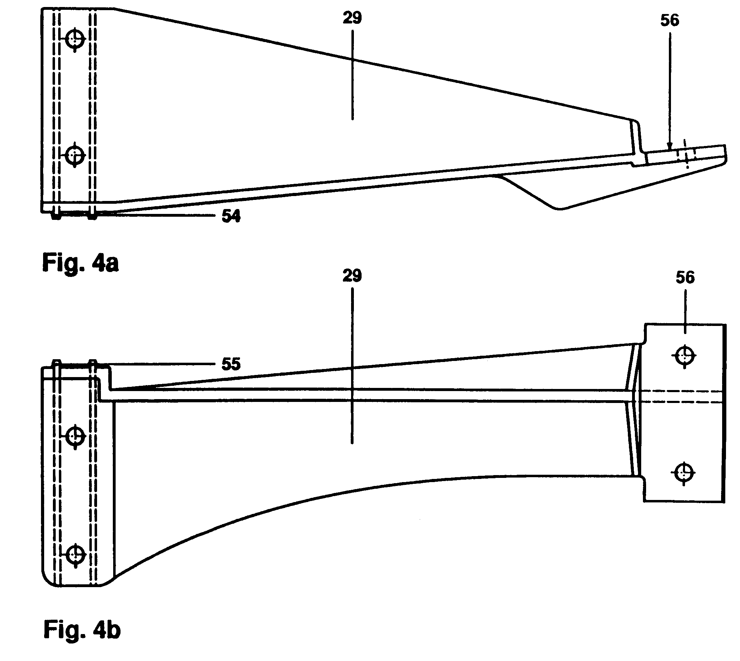

Die Figur 4a zeigt die Seitenansicht, die Figur 4b die Draufsicht einer beispielhaften Dachkonsole 29. Das Wulstpaar 55 kann an den Seitenflächen in Form einer hinterschnittenen Nut einer Seitenwandsäule festgelegt werden. An das Wulstpaar 54 kann die hinterschnittene Nut eines Profilstabes, welcher zwischen zwei Seitenwandsäulen angeordnet ist, festgelegt werden. Die Dachkonsole 29 kann somit auch die Funktion eines Eckstückes übernehmen. Am inneren Ende der Dachkonsole 29 ist die Auflagefläche 56. Auf dieser Auflagefläche 56 können Spriegel oder Profilstäbe und/oder Verbundplatten als Innendachteil befestigt werden. Die Deckenkonsolen können beispielsweise Schmiede- oder Gussstücke aus Metall, wie Aluminium, sein.

Die Profile, wie Dachprofile, Seitenwandsäulen, Profilpfosten, Profilstäbe, Vertikalprofile usw. können beispielsweise mittels Eckstücken, Winkelstücken und dergl. miteinander verbunden werden. Beispiele für derartige Verbindungen können der CH-PS 627 982 oder der EP-A 0 136 264 entnommen werden. Die Befestigung von plattenförmigen Elementen, wie Boden oder Innendach, Zwischenböden, Innendachplatten, Seiten- oder Abschlusswänden etc. kann beispielsweise gemäss einer Ausführungsform, wie in der EP-B 0 185 678 beschrieben, verwirklicht werden.

## Patentansprüche

1. Gerippestruktur eines Wagenkastens, mit vertikalen Seitenwandsäulen (14) und einer horizontal und in seitlichem Versatz zu den Seitenwandsäulen (14) angeordneten Bodenplatte (11), wobei
die Bodenplatte (11) mittels den Seitenwandsäulen (14) zugeordneten Konsolen (31), die einerseits an den Seitenwandsäulen (14) und andererseits an Randbereichen der Bodenplatte (11) festgelegt sind, gehalten ist, dadurch gekennzeichnet, daß beidseitig des Wagenkastens mehrere Konsolen (31) entlang jeder Seitenwand unter Bildung von Zwischenräumen voneinander beabstandet sind und daß die Bodenplatte (11) zwischen den Konsolen (31) freitragend ist.

2. Gerippestruktur nach Anspruch 1, dadurch gekennzeichnet, dass die Bodenplatte (11) mittels Konsolen (31) am unteren Ende der vertikalen Seitenwandsäulen (14) angeordnet ist.

3. Gerippestruktur nach Anspruch 1 oder 2, dadurch gekennzeichnet, dass eine Dachkonstruktion ein Innendachteil (28) enthält, welches in seitlichem Versatz zu den Seitenwandsäulen (14) steht und mittels jeder Seitenwand (14) zugeordneter Dachkonsolen (29), die einerseits an den Seitenwandsäulen (14) und andererseits an Randbereichen des Innendachteils (29) festgelegt sind, gehalten ist.

4. Gerippestruktur nach einem der Ansprüche 1 bis 3, dadurch gekennzeichnet, dass die Bodenplatte (11) eine mehrschichtige Verbundplatte ist.

5. Gerippestruktur nach einem der Ansprüche 1 bis 4, dadurch gekennzeichnet, dass die Bodenplatte (11) randständig offene Profile (30) aufweist.

6. Gerippestruktur nach Anspruch 1 und 3, dadurch gekennzeichnet, dass die Bodenplatte (11) und das Innendachteil (28) einteilige mehrschichtige Verbundplatten sind, die sich über den ganzen Bereich der Ausdehnung zwischen den vertikalen Seitenwandsäulen (14) erstrecken.

7. Gerippestruktur nach Anspruch 1 und 3, dadurch gekennzeichnet, dass die Bodenplatte (11) als einstückige Verbundplatte am unteren Ende der vertikalen Seitenwandsäulen (14) und das Innendachteil (28) als einstückige Verbundplatte im Bereich der oberen Enden der vertikalen Seitenwandsäulen (14) angeordnet ist.

8. Gerippestruktur nach Anspruch 1, dadurch gekennzeichnet, dass die Konsolen (31) an wenigstens einer Stirnseite jeweils einer Seitenwandsäule (14) mittels einer Feder oder einem Wulst, welche in eine Nut der Seitenwandsäule greift, festgelegt sind und an einer unteren nach innen gerichteten Seite der Konsole (31) eine waagrecht verlaufende Feder, ein Wulst, eine Doppelfeder oder ein Doppelwulst (45) vorhanden ist, welcher in das randständige Profil (30) an der Bodenplatte (11) mit entsprechender einfacher oder doppelter Nut (53) greift.

## Claims

1. Framework structure for a vehicle body, comprising vertical side-wall columns (14) and a floor panel (11) arranged horizontally and laterally offset relative to the side-wall columns (14), in which the floor panel (11) is held by means of brackets (31) associated with the side-wall columns (14) and secured, on the one hand, to the side-wall columns (14) and, on the other hand, to edge regions of the floor panel (11), characterised in that a plurality of brackets (31) are arranged at a distance from one another along each side wall on either side of the vehicle body, thereby forming intermediate spaces, and that the floor panel (11) is self-supporting between the brackets (31).

2. Framework structure according to claim 1 characterised in that the floor panel (11) is arranged at the lower end of the vertical side-wall columns (14) by means of brackets (31).

3. Framework structure according to claim 1 or claim 2, characterised in that a roof construction comprises an internal roof part (28) which is laterally offset relative to the side-wall columns (14) and is held by means of roof brackets (29) associated with each side wall (14) and secured, on the one hand, to the side-wall columns (14) and, on the other hand, to edge regions of the internal roof part (29).

4. Framework structure according to one of claims 1 to 3, characterised in that the floor panel (11) is a multi-layer composite panel.

5. Framework structure according to one of claims 1 to 4, characterised in that the floor panel (11) has open profiles (30) at its edges.

6. Framework structure according to claims 1 and 3, characterised in that the floor panel (11) and the internal roof part (26) are one-part multi-layer composite panels which extend over the entire region between the vertical side-wall columns (14).

7. Framework structure according to claims 1 and 3, characterised in that the floor panel (11) is arranged at the lower end of the vertical side-wall columns (14) as a one-piece composite panel and the internal roof part (28) is arranged in the region of the upper ends of the vertical side-wall columns (14) as a one-piece composite panel.

8. Framework structure according to claim 1, characterised in that the brackets (31) are secured to at least one end face of each side-wall column (14) by means of a tongue or a bulb which engages in a groove in the side-wall column, and a horizontally extending tongue, bulb, double tongue or double bulb (45) is provided on a lower, inwardly directed side of the bracket (31) and engages in the edge profile (30) on the floor panel (11) by means of a corresponding single or double groove (53).

## Revendications

1. Ossature d'une carrosserie de véhicule comportant des colonnes verticales (14) de paroi latérale et un panneau de plancher (11) disposé horizontalement et en position décalée latéralement par rapport aux colonnes (14) de paroi latérale, dans lequel
le panneau de plancher (11) est maintenu au moyen de consoles (31) qui sont associées aux colonnes (14) de paroi latérale et sont fixées d'une part aux colonnes (14) de paroi latérale et d'autre part aux zones de bordure du panneau de plancher (11),
caractérisée par le fait que, des deux côtés de la carrosserie de véhicule, plusieurs consoles (31) sont à une certaine distance l'une de l'autre le long de chaque paroi latérale, en formant des espaces intermédiaires, et que le panneau de plancher (11) est autoportant entre les consoles (31).

2. Ossature selon la revendication 1, caractérisée par le fait que le panneau de plancher (11) est disposé, au moyen des consoles (31), à l'extrémité inférieure des colonnes verticales (14) de paroi latérale.

3. Ossature selon la revendication 1 ou 2, caractérisée par le fait qu'une construction de toit contient une partie formant toit intérieur (28) qui se trouve en position décalée latéralement par rapport aux colonnes (14) de paroi latérale et qui est maintenue au moyen de consoles de toit (29) qui sont associées à chaque paroi latérale (14) et qui sont fixées d'une part aux colonnes (14) de paroi latérale et d'autre part aux zones de bordure de la partie formant toit intérieur (29).

4. Ossature selon l'une des revendications 1 à 3, caractérisée par le fait que le panneau de plancher (11) est un panneau composite multicouche.

5. Ossature selon l'une des revendications 1 à 4, caractérisée par le fait que le panneau de plancher (11) présente en bordure des profilés ouverts (30).

6. Ossature selon les revendications 1 et 3, caractérisée par le fait que le panneau de plancher (11) et la partie formant toit intérieur (28) sont des panneaux composites monoblocs monocouches qui s'étendent sur toute la plage de l'extension entre les colonnes verticales (14) de paroi latérale.

7. Ossature selon les revendications 1 et 3, caractérisée par le fait que le panneau de plancher (11) est disposé, sous forme de panneau composite monobloc, à l'extrémité inférieure des colonnes verticales (14) de paroi latérale et que la partie formant toit intérieur (28) est disposée, sous forme de panneau composite monobloc, dans la zone des extrémités supérieures des colonnes verticales (14) de paroi latérale.

8. Ossature selon la revendication 1, caractérisée par le fait que les consoles (31) sont fixées à, chacune, au moins une face frontale d'une colonne (14) de paroi latérale au moyen d'une clavette ou d'un bourrelet qui vient en prise dans une rainure de la colonne de paroi latérale et qu'à une face inférieure, orientée vers l'intérieur, de la console (31) il y a une clavette, un bourrelet, un ressort elliptique ou un double bourrelet (45), orienté horizontalement, qui vient en prise avec une rainure simple ou double correspondante (53) dans le profilé de bordure (30) du panneau de plancher (11).
